# EUROPEAN PATENT SPECIFICATION

(11) **EP 3 032 173 B1**
(45) Date of publication and mention of the grant of the patent: **18.07.2018**
(21) Application number: 15197028.2
(22) Date of filing: 30.11.2015
(51) Int. Cl.: F23N 1/00, F16K 5/10

(54) **GAS TYPE ADAPTION DEVICE FOR A GAS BURNER APPLICATION AND GAS/AIR MIXING DEVICE FOR A GAS BURNER APPLICATION COMPRISING A GAS TYPE ADAPTION DEVICE**
GASTYPANPASSUNGSVORRICHTUNG FÜR EINE GASBRENNERANWENDUNG UND GAS/LUFT-MISCHVORRICHTUNG FÜR EINE GASBRENNERANWENDUNG MIT EINER GASTYPANPASSUNGSVORRICHTUNG
DISPOSITIF D'ADAPTATION DE TYPE DE GAZ POUR UNE APPLICATION DE BRÛLEUR À GAZ ET DISPOSITIF DE MÉLANGE GAZ/AIR DESTINÉ À UNE APPLICATION DE BRÛLEUR À GAZ COMPRENANT UN DISPOSITIF D'ADAPTATION DE TYPE À GAZ

(30) Priority: 11.12.2014 EP 14197319
(43) Date of publication of application: 15.06.2016
(73) Proprietor: Honeywell Technologies Sarl, 1180 Rolle (CH)
(72) Inventor: Kralicek, Libor, 68301 Rousinov (CZ)
(74) Representative: Sturm, Christoph

(56) References cited:
- JP-A- 2011 185 575
- US-A- 3 001 547
- US-A1- 2013 260 327

## Description

The present patent invention relates to a gas type adaption device for a gas burner application. The present patent invention relates further to a gas/air mixing device for a gas burner application comprising a gas type adaption device.

In a gas burner application a gas type switch is used to adapt the gas burner application to different gas qualities and/or different gas types. A gas type switch is usually accommodated with a housing of gas/air mixing device of the gas burner application. A gas type switch comprises a housing. The housing of the gas type switch provides at least two gas inlet orifices, wherein each of said gas inlet orifices can selectively be brought in communication with a gas inlet opening of the gas/air mixing device in order to adjust the gas burner application to different gas qualities and/or different gas types. Such a gas type switch can merely be used for a rough-adjustment of the gas burner application to different gas qualities and/or different gas types

US 2013/260327 A1 discloses a gas type adaption device according to the preamble of appended claim 1. Other prior art is disclosed by US 3 001 547 A and JP 2011 185575 A. Against this background, a novel gas type adaption device for a gas/air mixing device according to claim 1 is provided.

According to the invention, the gas throttle being positioned within the housing interior of the gas type adaption device comprises a throttle plunger, a throttle stem carrying or providing the throttle plunger, a plunger housing acting together with the throttle plunger, an actuation element acting on the throttle stem for adjusting the position of the throttle plunger relative to the plunger housing and a throttle diaphragm for sealing a gas flow section of the housing interior of the gas type adaption device against an actuation section of the housing interior of the gas type adaption device. Such a gas type adaption device allows an accurate, easy and quick fine-adjustment of a gas burner application comprising the gas type adaption device to different gas qualities and/or different gas types.

The plunger housing is an integral element of the housing of the gas type adaption device. This reduces the number of required parts and thereby manufacturing costs.

Preferably, the throttle plunger and the plunger housing are positioned within the gas flow section of the housing interior of the gas type adaption device, wherein the actuation element is positioned within the actuation section of the housing interior of the gas type adaption device, and wherein the throttle stem extends between the gas flow section of the housing interior and the actuation section of the housing interior. Such a gas type adaption device allows an accurate and easy fine-adjustment of a gas burner application comprising the gas type adaption device to different gas qualities and/or different gas types.

According to a preferred embodiment of the invention, the actuation element is an adjustment screw acting together with an adjustment nut, wherein the adjustment screw is driven by a motor, e.g. by a stepper motor, wherein the motor is actuated by a gas quality controller or combustion quality controller to allow a very precise fine-adjustment of the gas type adaption device by an automatic control function. Alternatively, the adjustment screw can be driven manually by a tool.

The gas/air mixing device is defined in claim 7.

Preferred developments of the invention are provided by the dependent claims and the description which follows. Exemplary embodiments are explained in more detail on the basis of the drawing, in which:
- Figure 1: shows a cross section through a gas/air mixing device of a gas burner application;
- Figure 2: shows a first cross section through a gas type adaption device according to a first embodiment;
- Figure 3: shows a second cross section through the gas type adaption device of Figure 2;
- Figure 4: shows a first perspective view of the gas type adaption device of Figures 2 and 3;
- Figure 5: shows a second perspective view of the gas type adaption device of Figures 2 to 4;
- Figure 6: shows a detail of the gas/air mixing device with the gas type adaption device of Figures 2 to 5 being assembled in a gas/air mixing device,
- Figure 7: shows the detail of Figure 6 together with an actuation motor;
- Figure 8: shows a perspective view of a detail of the gas/air mixing device with a gas type adaption device according to a second embodiment being assembled in the gas/air mixing device;
- Figure 9: shows a cross section through Figure 8 in a first status of the gas type adaption device;
- Figure 10: shows the cross section of Figure 9 in a second status of the gas type adaption device;
- Figure 11: shows another cross section through the detail of Figure 8; and
- Figure 12: shows a partial cross section through the gas type adaption device of Figures 2 to 7 and thorough the actuation motor connected to the gas type adaption device.

The present invention relates to a gas type adaption device for a gas burner application.

The present invention relates further to a gas/air mixing device for a gas burner application comprising such a gas type adaption device.

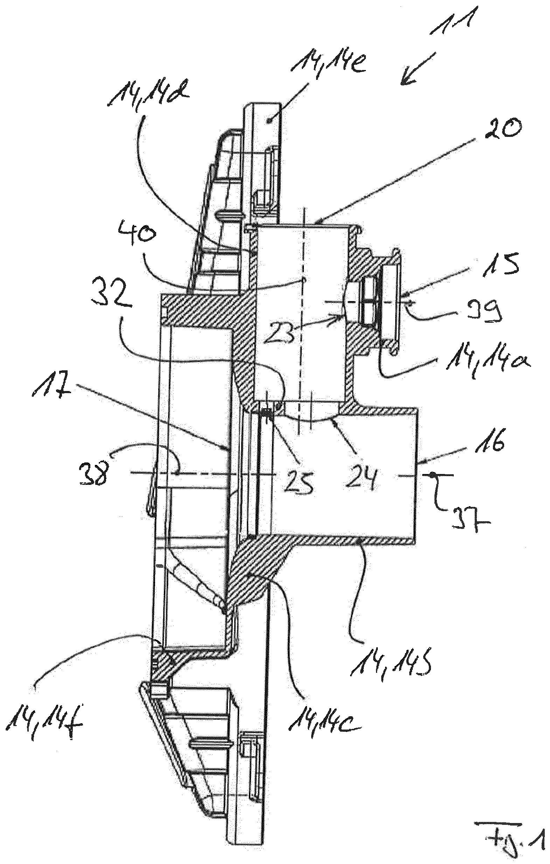

Figure 1 shows an example of a gas/air mixing device 11 for a gas burner application comprising a housing 14.

The housing 14 of the gas/air mixing device 11 comprises a gas inlet section 14a with a gas inlet opening 15 for gas, an air inlet section 14b with an air inlet opening 16 for air, and an gas/air outlet section 14c with an outlet opening 17 for a gas/air mixture. In the region of the air inlet section 14b gas and air become mixed. The air inlet section 14b serves also as gar/air mixing section.

A gas control valve (not shown) can be connected to the gas inlet section 14a of the housing 14 of the gas/air mixing device 11 making use of a well-known quick connect system. A fan (not shown) can be connected to the gas/air outlet section 14c of the housing 14 of the gas/air mixing device 11. The fan sucks in air through the air inlet opening 16 of the air inlet section 14b of the housing 14 depending on the fan speed. The fan further sucks in gas, whereby the gas amount sucked in by the fan is adjusted by gas control valve. It also possible that the fan is connected to the air inlet section 14b of the housing 14 of said gas/air mixing device 11.

The housing 14 of the gas/air mixing device 11 further comprises a control pipe section 14d with a control pipe opening 20 for receiving and accommodating a gas type adaption device 10.

The gas inlet section 14a of the housing 14 opens into the control pipe section 14d of the housing 14, and the control pipe section 14d of the housing 14 opens into the air inlet section 14b of the housing 14.

The gas inlet section 14a, the air inlet section 14b, the gas/air outlet section 14c and the control pipe section 14d are all integral parts of a monolithic housing 14, preferably a monolithic die cast housing made from an aluminium alloy. The housing 14 can alternatively by made from a plastic material.

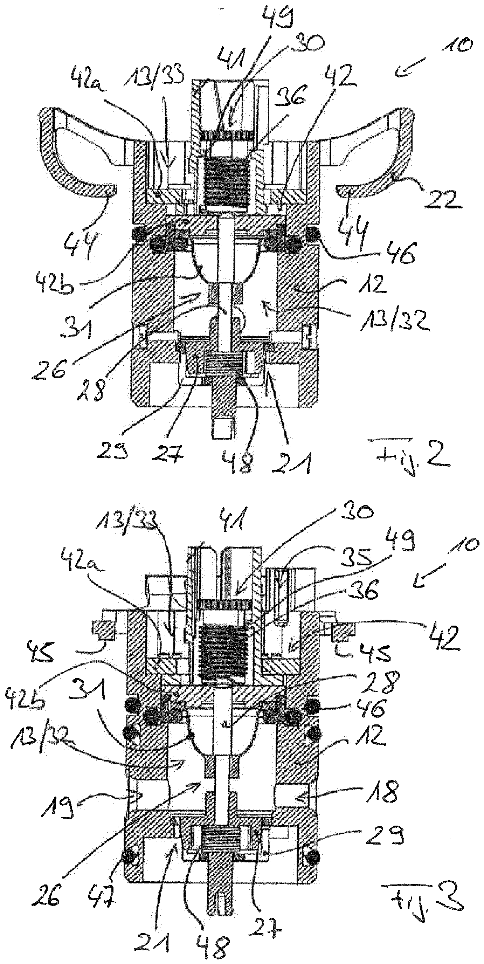

In the shown embodiment, the housing 14 further provides burner door 14e for the gas burner and a fan housing part 14f for the fan (not shown) being also integral parts of the monolithic housing 14. The assembly of Figure 1, 2 is mountable to a gas burner though said burner door 14e. It is also possible to keep the burner door 14e and/or the fan housing part 14f as a separate element. The same can be made from a plastic material.

The gas inlet section 14a of the housing 14 opens into the control pipe section 14d of the housing 14 though an internal opening 23.

The control pipe section 14d of the housing 14 opens into the air inlet section 14b of the housing 14 through an internal main opening 24 and through an internal bypass opening 25. The main opening 24 is used to guide the gas flow from the control pipe section 14d into the air pipe section 14b thereby mixing the gas and the air.

The bypass opening 25 is used by advanced accessory elements having measuring and/or control functions. The bypass opening 25 is initially closed and sealed by a break out element and can be opened by removing said break out element when the bypass opening 25 is used by an accessory element providing measuring and/or control functions.

Preferably, the air inlet section 14b of the housing 14 of said gas/air mixing device 11 accommodates a mixing unit like a venture unit (not shown) for mixing gas and air. It is also possible that no separate mixing unit is accommodated by the air inlet section 14b.

In the shown embodiment, an axis 37 of an air flow through the air inlet section 14b and an axis 38 of a gas/air mixture flow through the gas/air outlet section 14c fall together. An axis 40 the gas flow through the control pipe section 14d runs perpendicular to an axis 39 of the gas flow though the gas inlet section 14a and perpendicular to the axis 37 of the air flow through the air inlet section 14b. In the shown embodiment, an axis 39 of a gas flow though the gas inlet section 14a runs parallel to the axis 37 of the air flow through the air inlet section 14b. Alternatively, the axis 39 of a gas flow though the gas inlet section 14a runs perpendicular to the axis 37 of the air flow through the air inlet section 14b.

The axis 39 of a gas flow though the gas inlet section and the axis 37 of the air flow through the air inlet section 14b can in the projection of the same confine any angle. The axis 37 of the air flow through the air inlet section 14b and the axis 38 of the gas/air mixture flow through the gas/air outlet section 14c lie in a common, first horizontal plane. The axis 39 of the gas flow though the gas inlet section 14b lies in a second horizontal plane running parallel to the first horizontal plane, wherein the axis 40 of the gas flow through the control pipe section 14d lies in a third plane running perpendicular to the first plane and the second plane. Alternatively, the axis 39 of a gas flow though the gas inlet section 14a lies in a second plane running perpendicular to the first plane, wherein the axis 40 of the gas flow through the control pipe section 14d lies in a third plane running parallel to the first plane and perpendicular to the second plane.

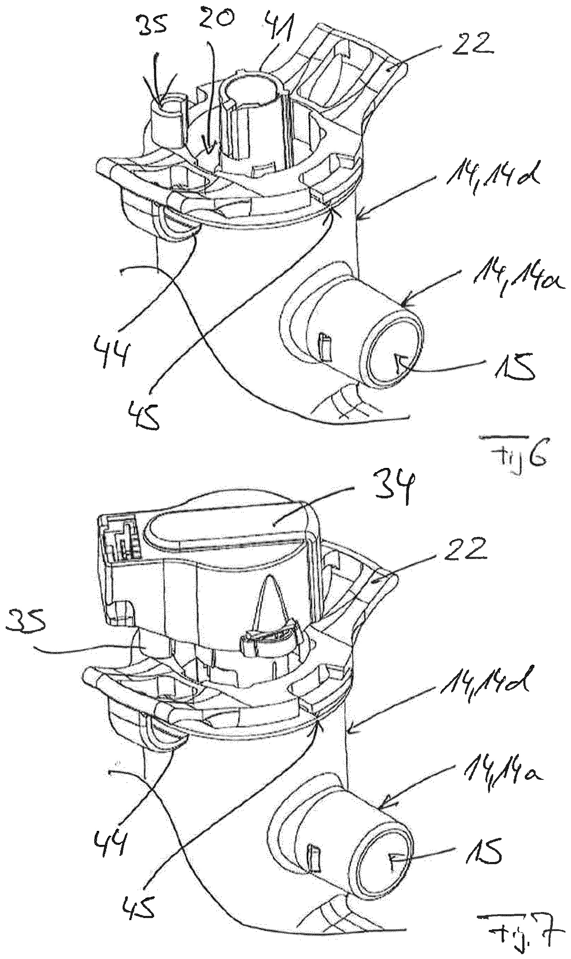

As mentioned above, the control pipe section 14d accommodates a gas type adaption device 10. Figures 2 to 7 show details of a first embodiment of the gas type adaption device 10.

The gas type adaption device 10 comprises a housing 12.

The housing 12 of the gas type adaption device 10 provides a housing interior 13, at least two gas inlet orifices 18, 19 and a gas outlet opening 21. Each of said gas inlet orifices 18, 19 can selectively be brought in communication with the gas inlet opening 15 of the gas inlet section 14a of the housing 14 of the gas/air mixing device 11. This can be done by rotating the gas type adaption device 10 accommodated by the control pipe section 14d of housing around the axis 40. A handle 22 can be used to rotate the gas type adaption device 10, wherein the handle 22 is an integral element of the housing 12 of the gas type adaption device 10.

By bringing one of said gas inlet orifices 18, 19 in communication with the gas inlet opening 15 of the gas inlet section 14a of the housing 14 of the gas/air mixing device 11 the gas type adaption device 10 and thereby the gas/air mixing device 11 can be adjusted to different gas qualities and/or different gas types, namely in form of a rough-adjustment.

This rough-adjustment is done stepwise meaning is discrete steps by rotating the gas type adaption device 10 manually as described above.

A gas throttle 26 is positioned within the interior 13 of the housing 12 of the gas type adaption device 10. The gas throttle 26 is, seen in flow direction of the gas, positioned between each of the gas inlet orifices 18, 19 of the housing 12 of the gas type adaption device 10 and the gas outlet opening 21 of the housing 12 of the gas type adaption device 10. The relative position of the gas throttle 26 defines the effective outlet cross section of the gas outlet opening 21 thereby allowing a fine-adjustment of the gas type adaption device 10 to different gas qualities and/or different gas types.

This fine-adjustment is preferably done continuously but could also be done stepwise.

The gas throttle 26 comprises a throttle plunger 27, a throttle stem 28 carrying the throttle plunger 27, a plunger housing 29 acting together with the throttle plunger 27, an actuation element 30 acting on the throttle stem 28 for adjusting the position of the throttle plunger 26 relative to the plunger housing 29, a spring element 48 and a throttle diaphragm 31 for sealing a gas flow section 32 of the housing interior 13 against an actuation section 33 of the housing interior 13. The relative position of the throttle plunger 27 relative to the plunger housing 29 defines the effective outlet cross section of the gas outlet opening 21 of the gas type adaption device 10.

The throttle plunger 27, the plunger housing 29 and the spring element 48 are positioned within the gas flow section 32 of the housing interior 13. The actuation element 30 is positioned within the actuation section 33 of the housing interior 13. The throttle stem 28 extends between the gas flow section 32 of the housing interior 13 and the actuation section 33 of the housing interior 13.

One end of the throttle stem 28 acts together with the actuation element 30. The other end of the throttle stem 28 carries the throttle plunger 27. The spring element 48 is positioned between the throttle plunger 27 and the plunger housing 29, namely in such a way that a first end of the spring element 48 acts against the throttle plunger 27 and a second end of the spring element 48 acts against the plunger housing 29.

The actuation element 30 is provided by an adjustment screw having an outer thread 36. The actuation element 30 is positioned with an adjustment nut 41. The adjustment nut 41 has an inner thread 49 acting together with the outer thread 36 of the adjustment screw 30. Said adjustment screw 36 can be used for a manual fine-adjustment and/or automatic fine-adjustment of the gas type adaption device 10 to different gas qualities and/or different gas types.

Figures 2 and 3 both show the gas throttle 26 in the same position in which the actuation element 30 is screwed in a first direction, preferably downwards, so that the throttle stem 28 and the throttle plunger 27 are moved downwards against the spring force of the spring element 48. In this status the spring element 48 is compressed and the throttle plunger 27 is moved against a seat provided by the plunger housing 29 thereby decreasing the gas flow through the gas throttle 26. When the actuation element 30 is screwed complete downwards in the first direction, the gas throttle 26 is closed.

By screwing the actuation element 30 in an opposite second direction, preferably upwards, the throttle stem 28 and the throttle plunger 27 can move upwards thereby lifting up the throttle plunger 27 and thereby increasing the gas flow through the gas throttle 26. The spring element 48 pushes the throttle plunger 27 and the throttle stem 28 upwards when the actuation element 30 is screwed in the second direction. The rotation of the actuation element 30 causes a linear movement of the throttle stem 28 and the throttle plunger 27 relative to the plunger housing 29.

The spring element 48 compensates for tolerances in the thread engagement of the threads 36, 49. Further, the spring element 48 ensures that the outer thread 36 of the actuation element 30 returns into engagement with the inner thread 49 of the adjustment nut 41 when the actuation element 30 is screwed completely downwards and thereafter upwards.

The actuation element 30 is preferably driven by a motor 34, e.g. by a stepper motor. Such a motor 34 can be automatically actuated by a gas quality controller or by combustion quality controller to provide an automatic, very accurate fine-adjustment of the gas type adaption device 10 by an automatic control function. In such a case, the gas quality can be measured e.g. by a gas quality sensor or the combustion quality can be measured by an exhaust gas sensor, wherein the control function can automatically actuate the motor 34 to adjust the gas type adaption device 10 to a changing gas quality.

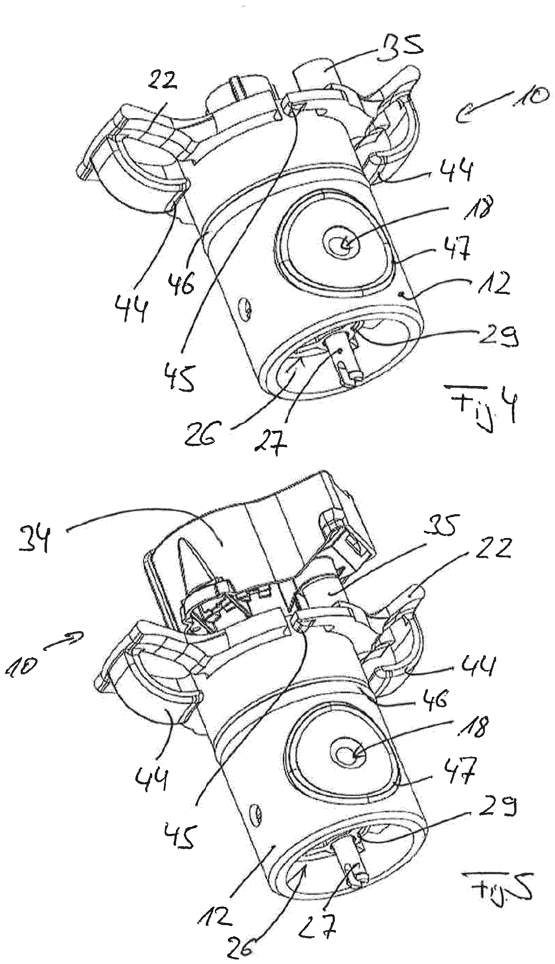

Fig. 4 shows a connection interface 35 through which a motor 34 is connectable to the actuation element 30. It is also possible to use a linear motor as actuation element 30.

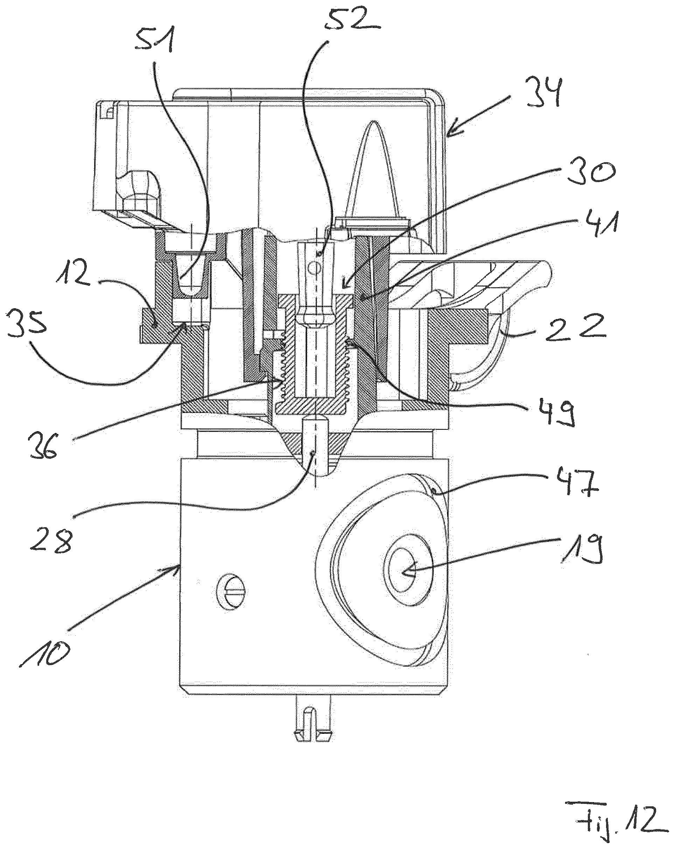

The connection interface 35 serves as anti-rotation element to avoid a rotation of a housing of the motor 34 relative to the housing 12 of the gas type adaption device 10 when the motor 34 is used to drive the actuation element 30. A protrusion 51 of the motor housing engages the connection interface 35 of the housing 12 of the gas type adaption device 10 (see Figure 12).

Details of the engagement of the motor 34 with the actuation element 30 of the gas type adaption device 10 are shown in Figure 12. The motor 34 comprises a shaft 52. The shaft 52 of the motor 34 engages the actuation element 30 of the gas type adaption device 10. The shaft 52 of the motor 34 penetrates into an opening of the actuation element 30 of the gas type adaption device 10. The shaft 52 of the motor 34 and the opening of the actuation element 30 have preferably a hexagonal cross section. However, both can hay any cross section allowing an engagement of the shaft 52 and the actuation element 30 in a form-fit manner.

By the rotation of the shaft 52 of the motor 34 the actuation element 30 can be rotated to provide the fine-adjustment.

The actuation element 30 can also be used for a manual fine-adjustment. In this case a tool, e.g. a hexagonal screw-driver, can be used to drive the actuation element 30 manually.

A mounting structure 42 allows a precise and easy mounting of the gas throttle 26 within the housing interior 13 of the housing 12 of the gas type adaption device 10.

In the embodiment of Figures 2 to 7 said mounting structure 42 is provided by plate-like elements 42a, 42b being screwed together, wherein a projection of the adjustment nut 41 is positioned between said plate-like elements 42a, 42b of the mounting structure 42. The mounting structure 42 has a hole or opening for guiding throttle stem 28.

The gas type adaption device 10 is mounted within the control pipe section 14d of the housing 14 by at least one connection element 44 like a snap-fit connection element or bayonet connection element and preferably by at least one anti-rotation element 45 both provided at the same end of the gas type adaption device 10 and control pipe section 14d. The anti-rotation element 45 keeps the gas type adaption device in the right orientation within the control pipe section 14d when the same has been rotated by the handle 22 in the desired position.

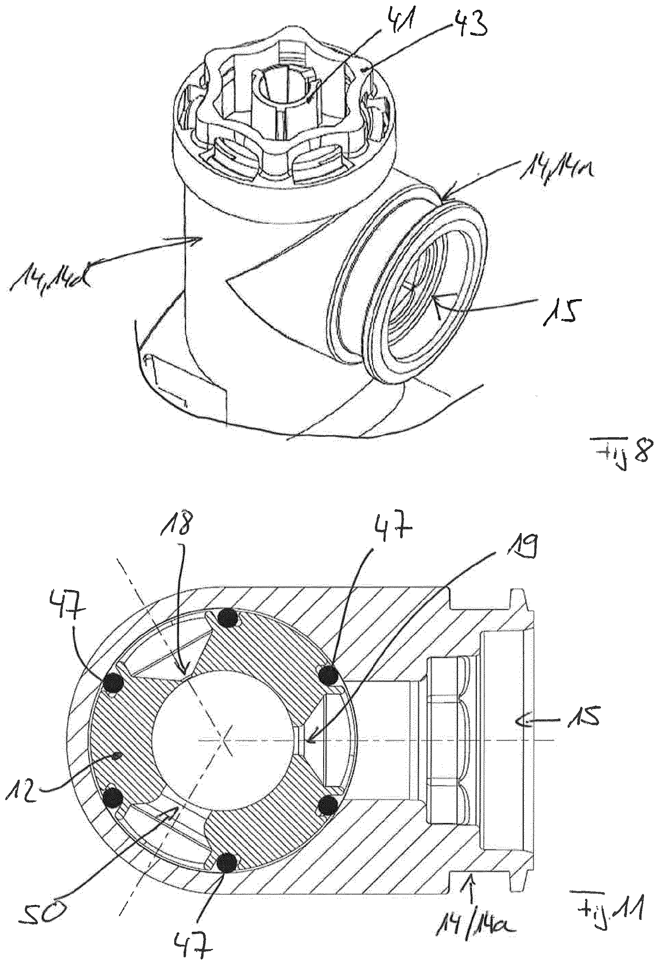

Figures 8 to 12 show another embodiment of a gas type adaption device 10 with an integrated gas throttle 26. The basic connect of the gas type adaption device 10 of Figures 2 to 7 is identical to the gas type adaption device 10 of Figures 8 to 12. For that, identical reference signs are used for identical elements. For the avoidance of repetitions, for these elements reference is made to the above description.

The gas type adaption device 10 of Figures 8 to 12 differs from the gas type adaption device 10 of Figures 2 to 7 by feature that the same does not have a handle 22 but an interface element 43 that can only be used to rotate the gas type adaption device 10 within the control pipe section 14d thereby providing the rough-adjustment by using a special tool. So only authorized person can change the relative position of the gas type adaption device 10 within the control pipe section 14d.

Further on, the gas type adaption device 10 of Figures 8 to 12 has three orifices 18, 19, 50 for the rough-adjustment (see Figure 11).

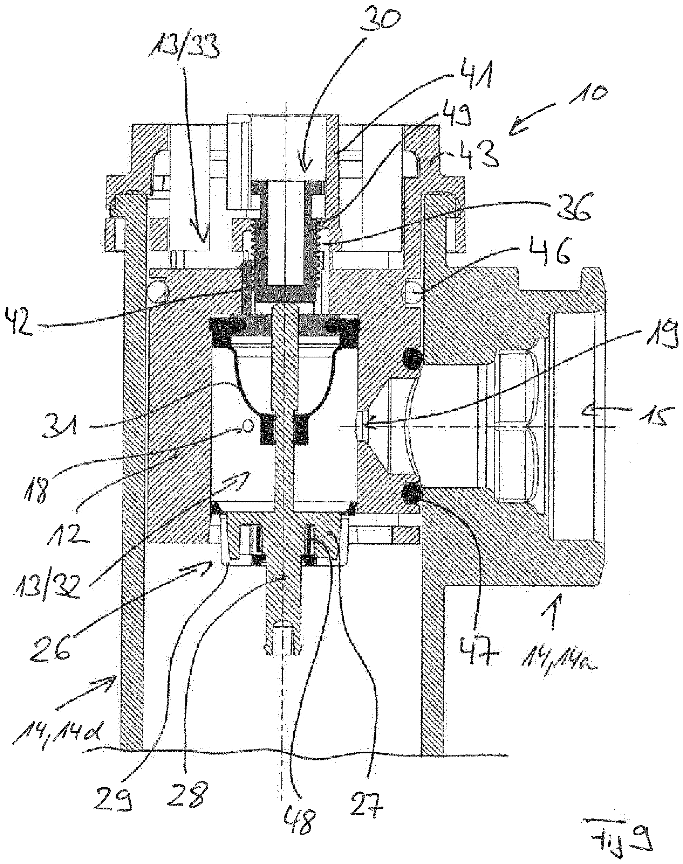

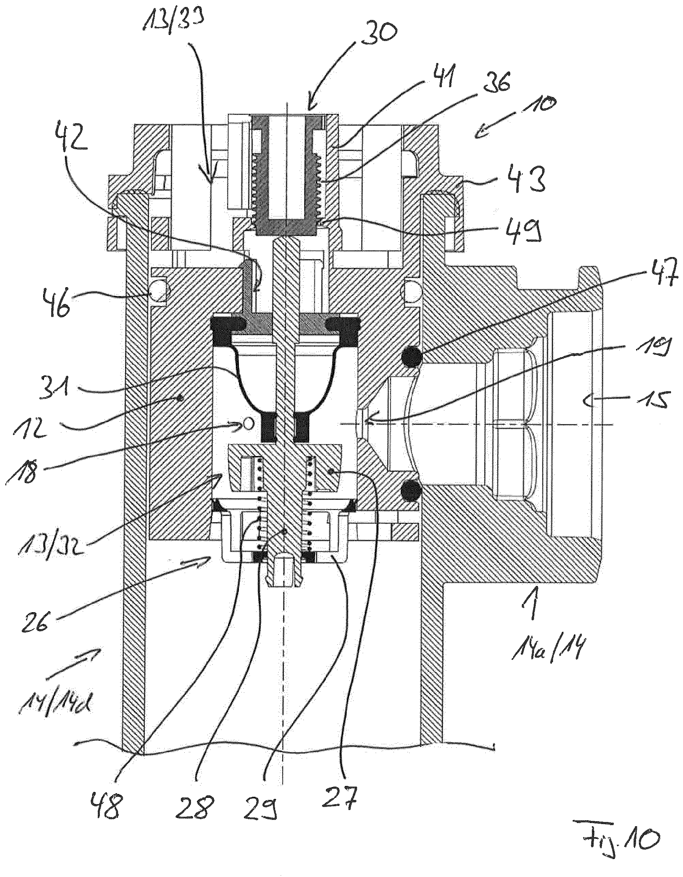

Additional differences between the gas type adaption device 10 of Figures 8 to 12 and the gas type adaption device 10 of Figures 2 to 7 can be seen from Figures 9 and 10. According to Figures 9 and 10, in the embodiment of Figures 8 to 12 the throttle plunger 27 is an integral element of the throttle stem 28. Further, the mounting structure 42 is provided by one single element.

Figure 9 shows (like Figures 2 and 3) the gas throttle 26 in a first status in which the actuation element 30 is screwed in the first direction, preferably downwards, so that the throttle stem 28 and the throttle plunger 27 are moved downwards against the spring force of the spring element 48. In this status the spring element 48 is compressed and the throttle plunger 27 is moved against the seat provided by the plunger housing 29 thereby decreasing the gas flow through the gas throttle 26. By screwing the actuation element 30 in an opposite second direction, preferably upwards, the throttle stem 28 and the throttle plunger 27 can move upwards, e.g. in the status shown in Figure 10, thereby lifting up the throttle plunger 27 and thereby increasing the gas flow through the gas throttle 26. The spring element 48 pushes the throttle plunger 27 and the throttle stem 28 upwards when the actuation element 30 is screwed in the second direction. The rotation of the actuation element 30 causes a linear movement of the throttle stem 28 and the throttle plunger 27 relative to the plunger housing 29.

As can been seen in Figures 2-5 and 9 and 10, the gas type adaption device 10 is sealed against the control pipe section 14d by sealing elements 46, 47. A first sealing element 46 provides a sealing function with respect to the control pipe opening 20 of the control pipe section 14d. Second sealing elements provides a sealing function between the opening 23 of the control pipe section 14d and the gas inlet orifice 18, 19, 50 which is actually brought in communication with an gas inlet opening 15 of the gas burner application.

### List of reference signs

- 10: gas type adaption device
- 11: gas/air mixing device
- 12: housing
- 13: housing interior
- 14: housing
- 14a: gas inlet section
- 14b: air inlet section
- 14c: gas/air outlet section
- 14d: control pipe section
- 14e: burner door
- 14f: fan housing part
- 15: gas inlet opening
- 16: air inlet opening
- 17: outlet opening
- 18: gas inlet orifice
- 19: gas inlet orifice
- 20: control pipe opening
- 21: gas outlet opening
- 22: handle
- 23: opening
- 24: main opening
- 25: bypass opening
- 26: gas throttle
- 27: throttle plunger
- 28: throttle stem
- 29: plunger housing
- 30: actuation element
- 31: throttle diaphragm
- 32: gas flow section
- 33: actuation section
- 34: motor
- 35: connection interface
- 36: outer thread
- 37: axis
- 38: axis
- 39: axis
- 40: axis
- 41: adjustment nut
- 42: mounting structure
- 42a: plate-like element
- 42b: plate-like element
- 43: interface element
- 44: connection element
- 45: anti-rotation element
- 46: sealing element
- 47: sealing element
- 48: spring element
- 49: inner thread
- 50: opening
- 51: protrusion
- 52: shaft

## Claims

1. Gas type adaption device (10) for a gas burner application, having
a housing (12), the housing (12) providing at least two gas inlet orifices (18, 19, 50), wherein each of said gas inlet orifices (18, 19, 50) can selectively be brought in communication with an gas inlet opening of the gas burner application in order to adjust the same to different gas qualities and/or different gas types thereby providing a stepwise rough-adjustment of the gas type adaption device to different gas qualities and/or different gas types,
a gas throttle (26) is positioned within the interior (13) of the housing (12), namely seen in flow direction of the gas between each of the gas inlet orifices (18, 19, 50) of the housing (12) and an outlet opening (21) of the housing (12), wherein the relative position of the gas throttle (26) defines the effective outlet cross section of the outlet opening (21) thereby providing a fine-adjustment of the gas type adaption device to different gas qualities and/or different gas types,
**characterized in that**
the gas throttle (26) comprises a throttle plunger (27), a throttle stem (28) carrying or providing the throttle plunger (27), a plunger housing (29) acting together with the throttle plunger (27), an actuation element (30) acting on the throttle stem (28) for adjusting the position of the throttle plunger (27) relative to the plunger housing (29), and a throttle diaphragm (31) for sealing a gas flow section (32) of the housing interior (13) against an actuation section (33) of the housing interior (12),
the gas throttle (26) comprises a spring element (48) acting on the throttle plunger (27) and the plunger housing (29),
the plunger housing (29) is an integral element of the housing (12) of the gas type adaption device.

2. Gas type adaption device as claimed in claim 1, **characterized in that** the throttle plunger (27) and plunger housing (29) are positioned within the gas flow section (32) of the housing interior (13), that the actuation element (30) is positioned within the actuation section (33) of the housing interior (13), and that the throttle stem (28) extends between the gas flow section (32) of the housing interior (13) and the actuation section (33) of the housing interior (13).

3. Gas type adaption device as claimed in claim 1 or 2, **characterized in that** the throttle stem (28) has s first end acting together with the actuation element (30) and a second end carrying or providing the throttle plunger (27).

4. Gas type adaption device as claimed in one of claims 1 to 3, **characterized in that** the actuation element (30) is provided by an adjustment screw acting together with an adjustment nut (41).

5. Gas type adaption device as claimed in claim 4, **characterized in that** the actuation element (30) is driven by motor (34), wherein a shaft (52) of the motor (34) engages an opening of the actuation element (30) in a form-fit manner.

6. Gas type adaption device as claimed in one of claims 1 to 5, **characterized in that** the gas throttle (26) provides for a continuously fine-adjustment of the gas type adaption device to different gas qualities and/or different gas types.

7. Gas/Air mixing device (11) for a gas burner application, having a housing (14), the housing (14) comprising
a gas inlet section (14a) with a gas inlet opening (15) for gas,
an air inlet section (14b) with an air inlet opening (16) for air,
a gas/air outlet section (14c) with an outlet opening (17) for a gas/air mixture,
a control pipe section (14d) with a control pipe opening (20) accommodating a gas type adaption device (10) as claimed in one of claims 1 to 6.

8. Gas/Air mixing device (11) as claimed in claim 7, **characterized in that** the gas inlet section (14a) opens into the control pipe section (14d) and the control pipe section (14d) opens to the air inlet section (14b), and that the gas inlet section (14a), the air inlet section (14b), the gas/air outlet section (14c) and the control pipe section (14d) are all integral parts of a monolithic housing (14).

## Patentansprüche

1. Gastypanpassvorrichtung (10) für eine Gasbrenneranwendung, die Folgendes aufweist:
ein Gehäuse (12), wobei in dem Gehäuse (12) mindestens zwei Gaseinlassmündungen (18, 19, 50) vorgesehen sind und jede der Gaseinlassmündungen (18, 19, 50) wahlweise in Kommunikation mit einer Gaseinlassöffnung der Gasbrenneranwendung gebracht werden kann, um diese an verschiedene Gasqualitäten und/oder verschiedene Gastypen anzupassen und dadurch eine schrittweise Grobeinstellung der Gastypanpassvorrichtung an verschiedene Gasqualitäten und/oder verschiedene Gastypen bereitzustellen,
eine Gasdrossel (26), die sich im Inneren (13) des Gehäuses (12) befindet, und zwar in einer Durchflussrichtung des Gases gesehen zwischen jeder der Gaseinlassmündungen (18, 19, 50) des Gehäuses (12) und einer Auslassöffnung (21) des Gehäuses (12), wobei die relative Position der Gasdrossel (26) den effektiven Auslassquerschnitt der Auslassöffnung (21) definiert und dabei eine Feineinstellung der Gastypanpassvorrichtung an verschiedene Gasqualitäten und/oder verschiedene Gastypen bereitstellt,
**dadurch gekennzeichnet, dass**
die Gasdrossel (26) einen Drosselkolben (27), einen Drosselschaft (28), der den Drosselkolben (27) trägt oder bereitstellt, ein Kolbengehäuse (29), das mit dem Drosselkolben (27) zusammenwirkt, ein Betätigungselement (30), das auf den Drosselschaft (28) zum Einstellen der Position des Drosselkolbens (27) in Bezug auf das Kolbengehäuse (29) wirkt, und eine Drosselmembran (31) zum Abdichten eines Gasdurchflussabschnitts (32) des Gehäuseinneren (13) gegenüber einem Betätigungsabschnitt (33) des Gehäuseinneren (12) aufweist, wobei
die Gasdrossel (26) ein Federelement (48) umfasst, das auf den Drosselkolben (27) und das Kolbengehäuse (29) wirkt, und
das Kolbengehäuse (29) ein integrales Element des Gehäuses (12) der Gastypanpassvorrichtung ist.

2. Gastypanpassvorrichtung nach Anspruch 1, **dadurch gekennzeichnet, dass** sich der Drosselkolben (27) und das Kolbengehäuse (29) in dem Gasdurchflussabschnitt (32) des Gehäuseinneren (13) befinden, dass sich das Betätigungselement (30) in dem Betätigungsabschnitt (33) des Gehäuseinneren (13) befindet, und dass sich der Drosselschaft (28) zwischen dem Gasdurchflussabschnitt (32) des Gehäuseinneren (13) und dem Betätigungsabschnitt (33) des Gehäuseinneren (13) erstreckt.

3. Gastypanpassvorrichtung nach Anspruch 1 oder 2, **dadurch gekennzeichnet, dass** der Drosselschaft (28) ein erstes Ende, das mit dem Betätigungselement (30) zusammenwirkt, und ein zweites Ende, das den Drosselkolben (27) trägt oder bereitstellt, besitzt.

4. Gastypanpassvorrichtung nach einem der Ansprüche 1 bis 3, **dadurch gekennzeichnet, dass** das Betätigungselement (30) durch eine Einstellschraube, die mit einer Einstellmutter (41) zusammenwirkt, bereitgestellt wird.

5. Gastypanpassvorrichtung nach Anspruch 4, **dadurch gekennzeichnet, dass** das Betätigungselement (30) durch einen Motor (34) angetrieben wird, wobei eine Welle (52) des Motors (34) in eine Öffnung des Betätigungselements (30) formschlüssig eingreift.

6. Gastypanpassvorrichtung nach einem der Ansprüche 1 bis 5, **dadurch gekennzeichnet, dass** die Gasdrossel (26) eine kontinuierliche Feineinstellung der Gastypanpassvorrichtung auf verschiedene Gasqualitäten und/oder verschiedene Gastypen zur Verfügung stellt.

7. Gas/Luft-Mischungsvorrichtung (11) für eine Gasbrenneranwendung, die ein Gehäuse (14) besitzt, wobei das Gehäuse (14) Folgendes umfasst:
einen Gaseinlassabschnitt (14a) mit einer Gaseinlassöffnung (15) für Gas,
einen Lufteinlassabschnitt (14b) mit einer Lufteinlassöffnung (16) für Luft,
einen Gas/Luft-Auslassabschnitt (14c) mit einer Auslassöffnung (17) für ein Gas/Luft-Gemisch,
einen Steuerrohrabschnitt (14d) mit einer Steuerrohröffnung (20), die eine Gastypanpassvorrichtung (10) nach einem der Ansprüche 1 bis 6 aufnimmt.

8. Gas/Luft-Mischungsvorrichtung (11) nach Anspruch 7, **dadurch gekennzeichnet, dass** der Gaseinlassabschnitt (14a) in den Steuerrohrabschnitt (14d) mündet und der Steuerrohrabschnitt (14d) in den Lufteinlassabschnitt (14b) mündet und dass der Gaseinlassabschnitt (14a), der Lufteinlassabschnitt (14b), der Gas/Luft-Auslassabschnitt (14c) und der Steuerrohrabschnitt (14d) integrale Elemente eines einteiligen Gehäuses (14) sind.

## Revendications

1. Dispositif (10) d'adaptation au type de gaz pour une application de brûleur à gaz, comprenant
un corps (12), le corps (12) ménageant au moins deux orifices (18, 19, 50) d'entrée de gaz, chacun desdits orifices (18, 19, 50) d'entrée de gaz pouvant être placé sélectivement en communication avec une ouverture d'entrée de gaz de l'application de brûleur à gaz afin de la régler pour différentes qualités de gaz et/ou différents types de gaz, réalisant ainsi un réglage approximatif pas à pas du dispositif d'adaptation au type de gaz pour différentes qualités de gaz et/ou différents types de gaz,
un étrangleur (26) de gaz étant positionné au sein de l'intérieur (13) du corps (12), autrement dit, vu dans la direction d'écoulement du gaz entre chacun des orifices (18, 19, 50) d'entrée de gaz du corps (12) et une ouverture (21) de sortie du corps (12), la position relative de l'étrangleur (26) de gaz définissant la section droite utile de sortie de l'ouverture (21) de sortie, réalisant ainsi un réglage fin du dispositif d'adaptation au type de gaz pour différentes qualités de gaz et/ou différents types de gaz,
**caractérisé en ce que**
l'étrangleur (26) de gaz comporte un piston (27) d'étrangleur, une tige (28) d'étrangleur portant ou constituant le piston (27) d'étrangleur, un logement (29) de piston agissant conjointement avec le piston (27) d'étrangleur, un élément (30) d'actionnement agissant sur la tige (28) d'étrangleur pour régler la position du piston (27) d'étrangleur par rapport au logement (29) de piston, et un diaphragme (31) d'étrangleur servant à rendre hermétique une section (32) d'écoulement de gaz de l'intérieur (13) du corps contre une section (33) d'actionnement de l'intérieur du corps (12),
l'étrangleur (26) de gaz comporte un élément (48) de ressort agissant sur le piston (27) d'étrangleur et le logement (29) de piston,
le logement (29) de piston fait partie intégrante du corps (12) du dispositif d'adaptation au type de gaz.

2. Dispositif d'adaptation au type de gaz selon la revendication 1, **caractérisé en ce que** le piston (27) d'étrangleur et le logement (29) de piston sont positionnés à l'intérieur de la section (32) d'écoulement de gaz de l'intérieur (13) du corps, **en ce que** l'élément (30) d'actionnement est positionné à l'intérieur de la section (33) d'actionnement de l'intérieur (13) du corps, et **en ce que** la tige (28) d'étrangleur s'étend entre la section (32) d'écoulement de gaz de l'intérieur (13) du corps et la section (33) d'actionnement de l'intérieur (13) du corps.

3. Dispositif d'adaptation au type de gaz selon la revendication 1 ou 2, **caractérisé en ce que** la tige (28) d'étrangleur présente une première extrémité agissant conjointement avec l'élément (30) d'actionnement et une deuxième extrémité portant ou constituant le piston (27) d'étrangleur.

4. Dispositif d'adaptation au type de gaz selon l'une des revendications 1 à 3, **caractérisé en ce que** l'élément (30) d'actionnement est constitué par une vis de réglage agissant conjointement avec un écrou (41) de réglage.

5. Dispositif d'adaptation au type de gaz selon la revendication 4, **caractérisé en ce que** l'élément (30) d'actionnement est entraîné par un moteur (34), un arbre (52) du moteur (34) interagissant avec une ouverture de l'élément (30) d'actionnement en épousant sa forme.

6. Dispositif d'adaptation au type de gaz selon l'une des revendications 1 à 5, **caractérisé en ce que** l'étrangleur (26) de gaz autorise un réglage fin en continu du dispositif d'adaptation au type de gaz pour différentes qualités de gaz et/ou différents types de gaz.

7. Dispositif (11) de mélange gaz/air pour une application de brûleur à gaz, doté d'un corps (14), le corps (14) comportant
une section (14a) d'entrée de gaz présentant une ouverture (15) d'entrée de gaz destinée à du gaz,
une section (14b) d'entrée d'air présentant une ouverture (16) d'entrée d'air destinée à de l'air,
une section (14c) de sortie gaz/air présentant une ouverture de sortie (17) destinée à un mélange gaz/air,
une section (14d) de tuyau de régulation présentant une ouverture (20) de tuyau de régulation recevant un dispositif (10) d'adaptation au type de gaz selon l'une des revendications 1 à 6.

8. Dispositif (11) de mélange gaz/air selon la revendication 7, **caractérisé en ce que** la section (14a) d'entrée de gaz débouche dans la section (14d) de tuyau de régulation et la section (14d) de tuyau de régulation débouche sur la section (14b) d'entrée d'air, et **en ce que** la section (14a) d'entrée de gaz, la section (14b) d'entrée d'air, la section (14c) de sortie gaz/air et la section (14d) de tuyau de régulation font toutes partie intégrante d'un corps (14) monolithique.
